# NEW EUROPEAN PATENT SPECIFICATION

(11) **EP 0 921 681 B2**
(45) Date of publication and mention of the opposition decision: **25.01.2006**
(45) Mention of the grant of the patent: 24.04.2002
(21) Application number: 98402880.3
(22) Date of filing: 20.11.1998
(51) Int. Cl.: H04N 7/088, H04N 5/44

(54) **Method and receiver for managing service information in a digital television system**
Verfahren und Vorrichtung zur Verwaltung von Dienstinformationen in einem Digitalfernsehsystem
Procédé et appareil pour la gestion d'informations de service dans un système de télévision numérique

(30) Priority: 02.12.1997 FR 9715163
(43) Date of publication of application: 09.06.1999
(73) Proprietor: THOMSON multimedia, 92100 Boulogne Billancourt (FR)
(72) Inventor: Straub, Gilles, 92648 Boulogne Cedex (FR); Tazine, Nour-Eddine, 92648 Boulogne Cedex (FR)
(74) Representative: Ruellan-Lemonnier, Brigitte

(56) References cited:
- EP-A- 0 782 346
- WO-A-96/13932
- WO-A-96/34491
- WO-A-97/30549
- US-A- 5 038 211

## Description

The invention relates to a process for managing service information in a digital television system, especially information relating to programme guides.

The invention applies among other things to digital television decoders.

Electronic programme guides (or EPGs) are software applications used within digital television systems. These applications provide the viewer with an interface whereby he may consult information relating, typically, to the programmes broadcast.

The information is transmitted by multiplexing appropriate data packets in the digital data stream. A name which is often used for this type of data is "Service Information" (or simply "SI").

The service information is broadcast periodically, the period being chosen in particular on the basis of the available passband and of the frequency of user requests for information. This is because, when the user wishes to view rapidly the information relating to a large number of programmes, it is desirable for the waiting time between the user's request for the information and the response to this request to be as short as possible. One means consists in furnishing each receiver or decoder with a large amount of memory in order to store as much information as possible so as to be able to respond immediately to the user's requests. It turns out that the total amount of information broadcast is such that this solution is not viable in a mass product intended for the general public, at least at the current price of semiconductor memories. Moreover, the fact that the item of information alters constantly would compel the receiver or decoder to devote a considerable part of its resources to the updating of the information, whether it be used subsequently or not. In particular, the number of data packet demultiplexing filters which can be programmed and implemented simultaneously is limited.

The two French Patent Applications FR 96 10067 (mono published as FR-A-2,752,350) and FR 96 10068 (mono published as FR-A-2,752,351) filed on 9 August 1996 in the name of the applicant relate to a module for managing service information in a receiver, especially a digital television decoder. Application FR 96 10067 relates to a television receiver and a process for managing the updating of certain types of data stored in an internal dynamic database in the receiver, whereas application 96 10068 relates to a process for indexing, in the internal database, data received and extracted from the digital stream. Application WO 98/09430, designating Europe, the United States, Japan and China, claims priority of application FR 9610068. Applications claiming priority of FR 960067 have been filed in Europe (Publication number EP-A-0823798), China (Pub. W-A-1175826), the United States (application 08/906597), Indonesia (application P-972774) and Japan (Pub. 98508/98).

These two patents also describe the requests which an application such as a programme guide may issue in order to request this or that item of information from the module for managing the SI data, which module programs the demultiplexer: permanent or one-off request, expected or unexpected.

According to these two patents, data corresponding to permanent requests are stored in the internal database until the deprogramming of the permanent request, whereas data extracted following a one-off request are not kept in memory beyond the immediate processing.

In the case where the user retraces his steps through the programme guide, it is possible that recently erased data may have to be extracted once again.

The invention proposes to increase the reactivity of the system in such a case.

The subject of the invention is defined in the claims.

Other characteristics and advantages of the invention will emerge through the description of a nonlimiting embodiment. This embodiment is illustrated by the appended figures in which:
- Figure 1 is a block diagram of a television receiver in accordance with the present embodiment,
- Figures 2a to 2c are timecharts of the exchanges taking place between an application, the data management module and the demultiplexer of the device of Figure 1,
- Figure 3a, respectively 3b is a state diagram illustrating the manner of operation of a one-off request, respectively a permanent request,

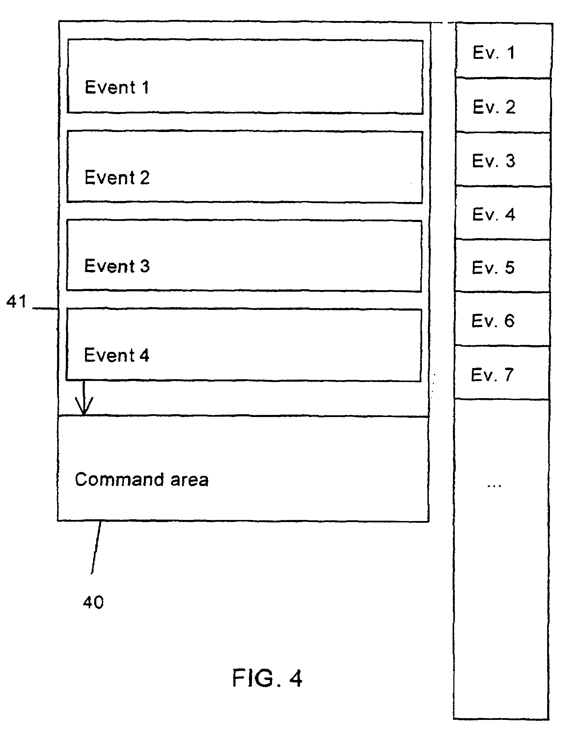

- Figure 4 is a diagram of a screen of an application, namely an electronic programme guide,
- Figure 5 is a diagram of the database maintained by the management module at a given instant.

For further information regarding the format and contents of MPEG and DVB service data, segments and tables, reference will be made in particular to the following three documents:
(a) ETS 300 468 - Specification for Service Information (SI) in Digital Video Broadcast (DVB) systems - January 23, 1996,
(b) ISO/IEC 13818-1 (1994) Generic Coding of Moving Pictures and Associated Audio - Recommendation H.220, also called "MPEG II Systems", and
(c) ETR 211 - Digital Broadcasting systems for television: Implementation guidelines for the use of MPEG-2 systems; Guidelines on implementation and usage of service information.

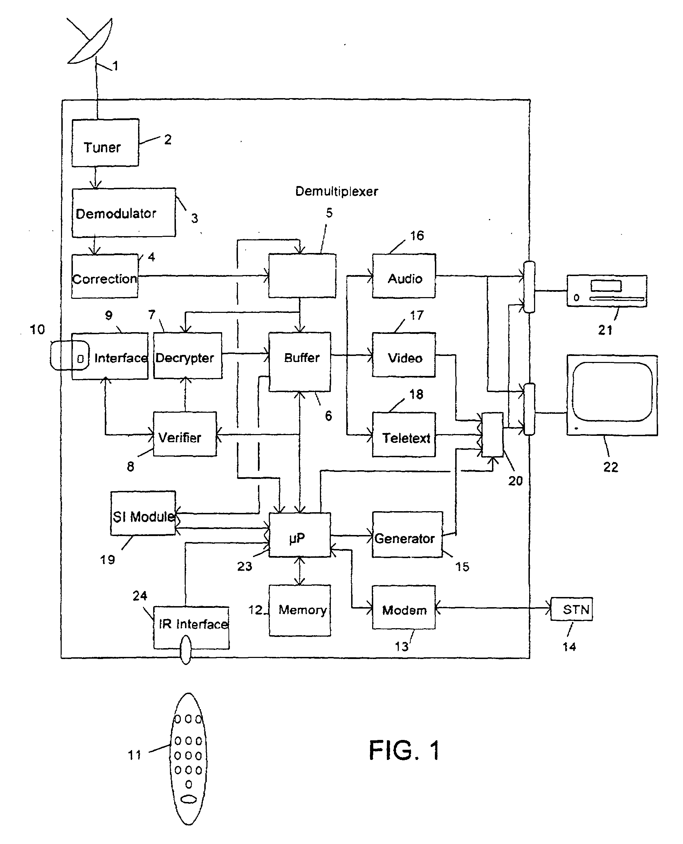

Figure 1 is a block diagram of an integrated decoder/receiver for digital television, of DVB type (Digital Video Broadcasting).

It is obvious that the invention is not limited to this physical environment but may easily be adapted to some other type of transmission of service data, for example transmission by way of modulated data within the frame flyback interval.

The decoder of Figure 1 is linked to an antenna 1, itself linked to a tuner 2 of the decoder. The signal delivered by the tuner is demodulated by a demodulator 3. The demodulated data are corrected by a corrector circuit 4 and transmitted to a demultiplexer 5.

The latter is for example a demultiplexer similar to the one described in French Patent Application 95 15767 filed on 29 December 1995 in the name of THOMSON MULTIMEDIA. The demultiplexer 5 comprises a number of filtering registers, termed filters by extension, programmed by a microprocessor 23 as a function of the various applications supported by the decoder. The demultiplexer compares the contents of the filtering registers with certain parameters of the data packets and loads the data packets corresponding to a positive comparison.

For the sake of the clarity of the diagram, only the most important connections of the microprocessor 23 are illustrated.

The audio or video packets or segments filtered by the demultiplexer are stored in predefined areas of a buffer memory 6 awaiting applications. If necessary, the information is firstly decrypted by a decrypter circuit 7 as a function of the user's entitlement, before being stored in this buffer memory 6.

According to the present example, there are five applications: an audio decoder 16, a video decoder 17, a Teletext decoder 18, an access control assembly (comprising the decrypter 7, a checking microcontroller 8 and an interface for a microprocessor card 9 which is linked, in normal operating mode, to a microprocessor card 10), as well as a service data management module.

The decoder also comprises an infrared interface for a remote control 24, the said interface also being linked to the microprocessor 23. The latter is connected to a memory 12 containing the operating system as well as the resident or downloaded programs for implementing the applications.

A modem 13 linked to the switched telephone network 14 is also controlled by the microprocessor.

A character generator 15 allows the generation of command menus or graphics relating to the parameters of the decoder or to a particular application. The video signal generated by this character generator is multiplexed with one of the video signals originating from the video decoder 17 orfrom the Teletext decoder 18 heading for a first SCART socket linked to a television 22 or a second SCART socket linked to a video recorder 21. The multiplexing circuit 20 is managed by the microprocessor 23.

According to the present example embodiment, the service data management module is physically speaking a program managed by the microprocessor, although conceptually it is an application which processes data packets, in the manner of an audio or video decoder, for which dedicated circuits are used.

The module is an interface between the service data (MPEG and DVB tables and segments) and customer applications (programme guides, telepurchasing, interactive games, etc.). It manages the requests from customer applications and maintains an internal database on the strength of the service data received.

According to the present example embodiment, the customer application is a programme guide which is also managed by the microprocessor.

A number of functions intended for formulating the requests relating to information required by the applications are made available to the customer applications by the management module.

The request functions operate asynchronously. The response to a request, if there is a response, is notified to an application by the management module when this response is available. This requires the implementation of a request function identification mechanism. For this purpose, an identifier is chosen by the application for each request issued and transmitted together with this request. This identifier is tied to the notification of response by the management module.

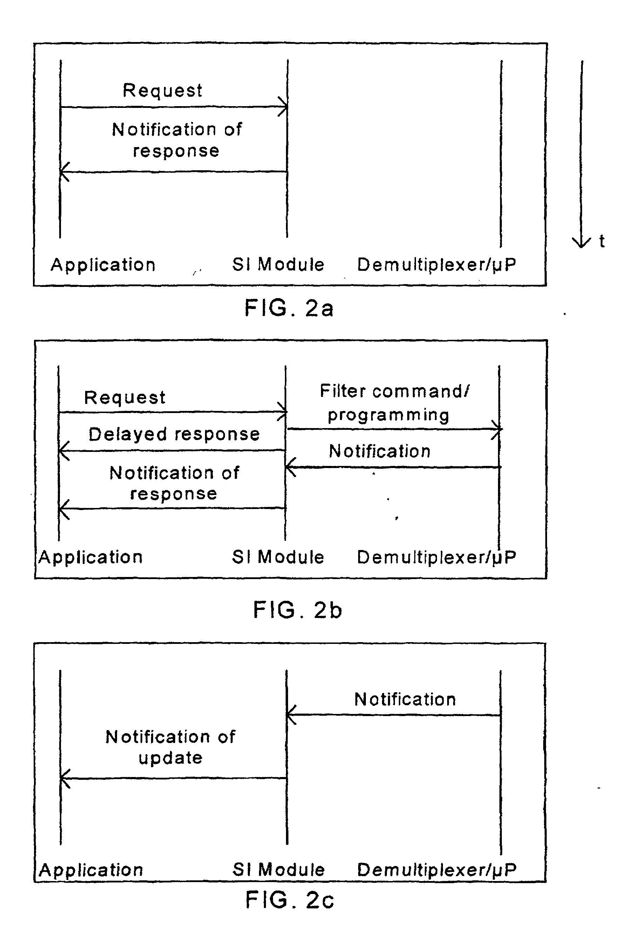

Figures 2a to 2c illustrate the three cases of exchanges, following a request, between the customer application, the service data management module and the source of these data, namely the demultiplexer/buffer memory/micro-processor assembly.

Figure 2a relates to the case in which the internal database ("cache memory") contains the information item requested by the customer application. The latter's request is followed by notification of availability of this item of information. The item of information being in this case present in the database, the notification of response is almost immediate. In this case, no item of data has been transferred to orfrom the demultiplexer. Data transferto the application is carried out through a buffer memory to which the management module writes the data. The area of the buffer memory to be used is identified in the application's request. The application, once notified, will read the data therefrom in due course. This case will be seen in greater detail later.

Figure 2b illustrates the case in which the item of information requested does not appear in the internal database. In this case, the customer application's request is likewise followed by notification by the management module to the application intended to inform it of the temporary unavailability of the information item, and then of a command addressed by the management module to the demultiplexer. When the segment or segments corresponding to the information item sought have been found in the data stream, demultiplexed and stored in the buffer memory, the demultiplexer notifies the SI management module that these segments are available. After reading and reformatting the data of the segments, the management module in tum notifies the customer application that the information item sought is available. As in the previous case, the module writes the item of information sought (which may be just some of the data from the segment) to a buffer memory allocated during its initial request by the customer application. Hence, in this case this notification arrives more slowly than in case 2a.

Figure 2c illustrates the case in which the initial request such as that of Figure 2a specifies that the changes in the information sought are to be signalled. In this case, the filters of the demultiplexer which have enabled the data packet containing this item of information to be extracted from the data stream are maintained at the previous values instead of being deactivated. This type of request, termed a permanent request, will be described in greater detail below.

According to the present example embodiment, there are four types of request:

### (a) One-off request:

When such a request is addressed by the application to the management module, the latter makes its resources (filter and memory) available only up to the moment at which the data requested are transferred to the application. The resources are in principle freed immediately.

### (b) Expected one-off request:

This request possesses the characteristics of the one-off request, but possesses a lower priority. The management module maintains two FIFO type memories, one for the expected requests and the other for the unexpected requests. Expected requests which are waiting are always processed after the unexpected requests.

### (c) Permanent request:

The resources of the management module are maintained, even after the data requested are demultiplexed and transferred. Whenever a change occurs in these data, notification is transmitted to the application. The management module therefore performs systematic monitoring, doing so until the application sends a command to interrupt this monitoring.

### (d) Expected permanent request:

This request is similar to the permanent request, but has a lower priority level.

The priorities attached to the requests do not of course in any way prejudge the order in which the data relating to these requests are actually received. This order depends also on factors such as the periodicity of each data item and the instant at which the request is formulated relative to this period.

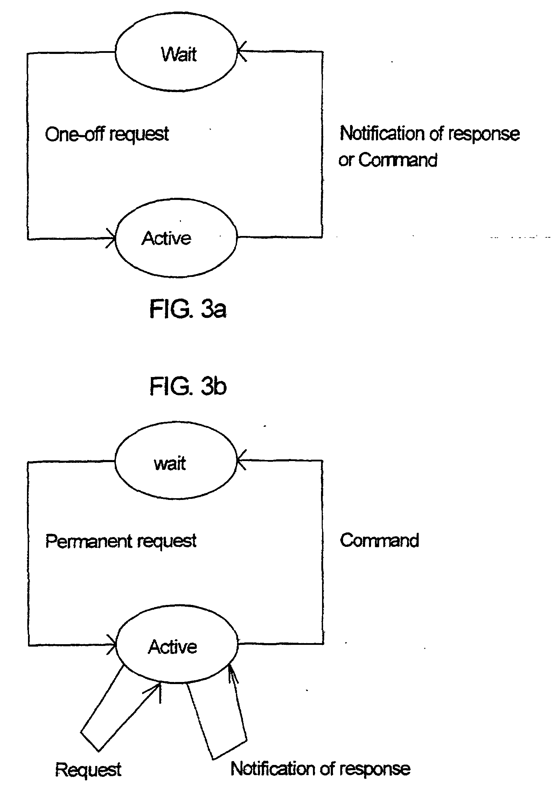

Figure 3a is a state diagram of a one-off request, whereas Figure 3b is a state diagram of a permanent request.

Whenever an application formulates a request, a request type must be associated therewith.

In the case of a permanent request, the data retrieved from the stream are additionally stored in the internal database in the management module. This is not the case for the data extracted following a one-off request, for which no copy of the data is preserved. When a new version of a table containing data relating to a permanent request is detected, the appropriate data from this table are compared with the data in the database. A change of version is indicated by a change of value of a parameter termed "version_id" or "version_number" transmitted with each table. A notification of update is not transmitted a priori unless at least one of these data has been modified. The version identifier of the table "version_id" is in fact modified regardless of the modification occurring in the table, even if it relates only to data not requested by an application. This mechanism avoids the transfer of redundant data between the application and the management module.

Moreover, application requests are distinguished from elementary requests. Application requests are, as their name indicates, requests issued by the customer applications. An application request is translated by the SI management module into as many elementary requests as necessary. In the present context, an elementary request is one which can be translated into a single filter at demultiplexer level. The elementary requests are determined in such a way that the data to which they relate do not overlap.

Two tables of requests are maintained by the SI module: A table of application requests and a table of elementary requests.

| **Request identifier** | **Type** | **Function** | **Wait** | **SingNB** | **SList** | **Parameters** |
|---|---|---|---|---|---|---|
| | | | | | | |
| | | | | | | |
| | | | | | | |

Table of application requests

| **Request identifier** | **Function** | **State** | **Type** | **Date** | **Number of application requests** | **Parameters** |
|---|---|---|---|---|---|---|
| | | | | | | |
| | | | | | | |
| | | | | | | |

Table of elementary requests

The table of application requests comprises the following elements for each request:
- a request identifier,
- the type of the request (expected one-off, unexpected one-off ...),
- the function of the request,
- 'Wait': Number of corresponding elementary requests waiting, that is to say which have not yet given rise to a response (a first notification to the application having issued the request is sent when this digit is equal to zero),
- 'SingNB': Number of elementary requests which have not given rise to a transfer of data to the buffer memory,
- 'SList': List of identifiers of elementary requests associated with this application request,
- parameters linked with the application request (for example, identification of a service for which a list of events is sought).

The table of elementary requests comprises the following elements for each elementary request:
- an identifier for the request,
- the type of the request,
- the function of the request,
- the state of the request,
- the number of application requests linked with the elementary request,
- the date of inactivation of the request (if relevant)
- parameters linked with the elementary request.

When the SI management module translates an application request into an elementary request or requests, it checks whether or not the table of elementary requests already contains these requests. A new elementary request is inserted into the corresponding table only if an identical request does not already exist. This makes it possible to avoid the use of the resources of the demultiplexer to redundant ends.

Two elementary requests are regarded as identical if they have the same function and the same parameters. If an elementary request is already present in the corresponding table, then the SI module checks the type of the already-existing elementary request. If this type has lower priority than the type of the new elementary request (this being the application request type which gave rise to this new elementary request), then the type of the existing elementary request is modified so as to take the new value. The classification of request types from lowest to highest priority is: expected one-off, expected permanent, unexpected one-off, unexpected permanent.

The subsequent elements of the table of application requests are updated following the programming or modifying of corresponding elementary requests: Wait, SList. The link with the contents of the table of elementary requests is thus established.

The table of elementary requests also has another role: it provides the possibility of determining whether or not a data item is present in the base and if this data item is or is not up to date.

The "State" field of a request from this table can take one of the following values:
- 'Waiting': the request is active, but the data have not yet been received;
- 'Ready': the request is active and the data have been stored in the database and are updated;
- 'Non-updated': the request is no longer active and the data are stored in the database, but are no longer updated.

The table of elementary requests also counts up, for each elementary request, the number of relevant active application requests. This number is incremented or decremented as dictated by the breaking down of new application requests or the deprogramming of old requests. When this number falls to zero for an elementary request, the state of the latter becomes 'non-updated' (if previously its state was'Ready'): in otherwords, it is inactive. The data extracted previously, if there are data, remain stored in the base.

An elementary request for which the number of application requests falls to zero and which has not, for one reason or another, stored information in the base, is deleted from the table. The corresponding filter of the demultiplexer is freed. The reasons for this may be diverse: overly fast deprogramming before data could be obtained, requested data not broadcast, etc.

An inactive elementary request can be reactivated by an appropriate application request, or be deleted from the table of elementary requests when it becomes necessary to free some space in the occupied memory in the database and when the data corresponding thereto are erased.

The date of inactivation of a request is stored in the table of elementary requests. In the present case, this date consists of the value of the system clock, this clock being synchronized with that of the encoder. However, it.is also conceivable to employ some other type of clock.

When the data corresponding to an elementary request (of one-off or permanent type) are demultiplexed, they are transferred to the buffer memory. This transfer takes place as many times as there are links with application requests. The number of elementary requests 'SingNB' in each of the relevant application requests is decremented. Notification of the availability of the data by the SI management module to an application is performed only when this number reaches zero for this application, that is to say when all the elementary requests linked with the application request issued by the application have given a result and have transferred it into the buffer memory.

By contrast, should there be a subsequent change of data in the base in respect of an elementary request, this change is notified immediately to the relevant applications.

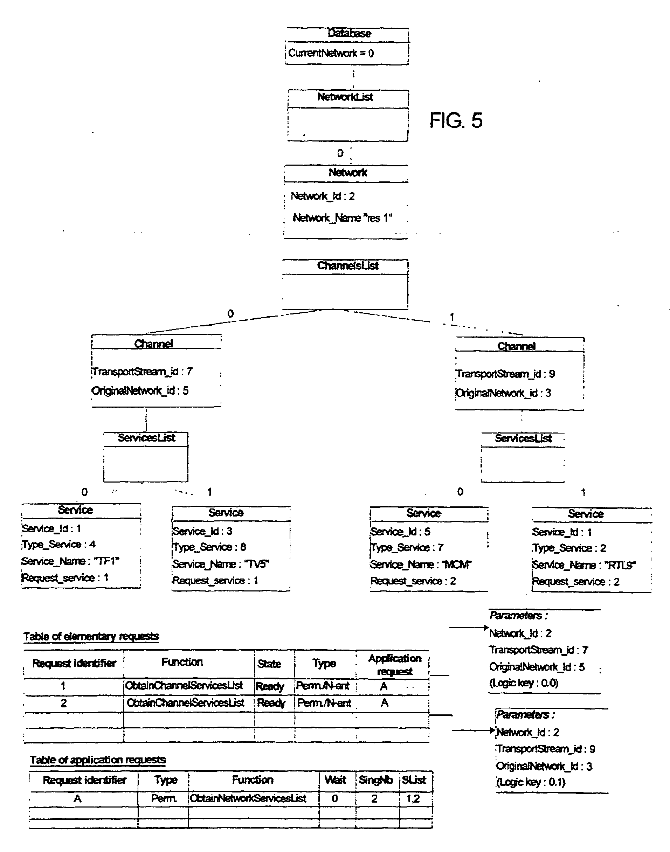

Figure 5, described later, gives an example of the two tables in a specific case.

When an elementary request is stamped as being 'non-updated', this does not mean to say that the data in the base are no longer actually up to date, but simply that there is a probability that this is so, given that the request from which they arise has not been maintained for a period of time which can be determined from the above mentioned date of inactivation.

When the management module transfers data into the buffer memory with a view to transferto the application, the contents of the 'Date' field or fields and of the 'State' field or fields is also stored there. These values will be read by the application which will decide on the use of this information. When the state is'Ready', the data are up to date. When the state is 'non-updated', they are not up to date and the 'Date' field indicates how old they are. If the application is a programme guide, the data displayed stamped as not being updated are displayed in such a way as to identify them as such: for example, shaded display or display in a colour which is distinct from an item of information which would be updated.

When the state of an elementary request is'Ready', the data are up to date. To indicate this to the application, during the transfer of the data, the transferred value of the 'Date' field is zero.

Although according to the present embodiment, only the permanent elementary requests (whether expected or not) give rise to storage of the data extracted in the database, there is provision according to a variant embodiment also to store the data corresponding to one-off requests. It will of course be necessary in this case also to maintain the elementary requests of one-off type in the corresponding table.

Whether or not non-updated data have been read in the internal database following a request, the filters of the demultiplexer are programmed (if this has not already been done) with a view to extracting the most recent values from the stream. These values, once extracted from the stream, are written to the database, if necessary overwriting the oldest data. The changes of state of the elementary requests are made accordingly: a request which already exists in the table can go from the 'Wait' state to the 'Ready' state, but also from the 'Non-updated' state to the 'Ready' state and vice versa. If there are no elementary requests corresponding to the data to be extracted, they are of course created.

According to the present example embodiment, the management of the 'version_id' parameters is performed at the level of the demultiplexer. Two types of filters are used: a first type in which the version number of the item of information to be retrieved is masked (the first version detected is demultiplexed, irrespective of its version number) and a second type in which the version number has a specified particular value (only the item of information having this version number would be demultiplexed).

When an elementary request is generated and no corresponding filter already exists, it is the first type of filter which is employed. Once the corresponding item of information has been detected and extracted, if the elementary request is of permanent type, the value of the version number extracted is incremented and added to the existing filter: a filter of the second type mentioned above is thus created. It is thus certain that the next version of the item of information will be detected.

It is of course conceivable to store the values of the version numbers in the database.

The cleaning up of the database with a view to freeing some memory is performed with the help of the date indicated in the 'Date' field of the table of elementary requests. Elementary requests in the 'non-updated' state as well as the data bound up with these requests are deleted in order of seniority. This cleanup is carried out when the database is full. It is carried out on the initiative and under the control of the SI management module so long as it relates only to elementary requests in the 'non-updated' state. When the database is full although there are no longer any requests in the 'non-updated' state, this fact is notified to the applications. An additional cleanup may then be carried out under the control of the applications.

One of the roles of the service data management module is to program the filters of the demultiplexer. In order to fulfil this function and allow fast access to the desired data, it maintains an image of the physical structure of the network or networks to which it has access.

Documents (a) and (b) define ten tables giving information about the configuration of the network or networks, multichannel packages, services and events transmitted. The tables are identified by particular PID (Packet Identification Data) values and particular table identifier values (table_id), the values of which are defined by the said documents. Each table contains a version identifier making it possible to determine whether the contents of this table have changed from one transmission of the table to the next.

The table in which we are interested here is the table called NIT (standing for Network Information Table). The NIT table comprises information about a given transmission network, especially the list of services available per transmission channel (or Transport Stream).

The data management module constructs an internal indexation of the networks, channels and services available. When the decoder is set going or when the NIT table is updated, a logic key is allocated to each of the services available. This key is the index for this service in the database maintained by the module.

In a DVB system, a service can be located in a unique manner via the path comprising the following variables:
- network_id (network identifier),
- (transport_stream_id; original_network_id) pair,
- service_id (actual service identifier).

The three variables are natural integers coded over 16 bits.

Three types of list are created, one list for the networks, one list of channels for each network and one list of services for each channel.

An element of the list of networks is created whenever an NIT table comprising a new network is demultiplexed. To do this, the transport packets whose PID is equal to 0x0010 0 are filtered. These packets in fact contain the NIT tables, additionally identified by a variable table_id. A 4-bit code is associated with each network, in the order in which the corresponding tables are demultiplexed. The code is the index of the address pointer for the structure comprising the information relating to this network.

The NIT table comprises the list of channels for this network, as well as the list of services available for each channel.

For each network in the list of networks, a list of channels is created. Each element of a list of channels is indexed with the aid of 5 bits. The list contains the address pointers for the structures comprising the data specific to each channel. The logic key for identifying a channel in the database is composed of the 4 index bits for the network, followed by the 5 bits of the index of the channel of this network.

For each channel, a list of services is created, comprising the identifiers of the services described by the NIT table. Each service in a list is indexed over 7 bits. The logic key of a service in the database therefore comprises in total 16 bits: 4 network index bits, 5 channel index bits and 7 service index bits.

An event of a service will be identified with the aid of the 16 bits designating this event (event_id variable of the table), to which will be added the 16 bits of the logic key of the associated service.

The structure of the database (excluding events) is organized according to the following structures:

| **Database** |
|---|
| |
| NetworksListAddress |

| **Networks list** | |
|---|---|
| 0 | NetworkAddress |
| 1 | NetworkAddress |
| 2 | NetworkAddress |
| 3 | NetworkAddress |
| 4 | NetworkAddress |
| 5 | NetworkAddress |
| 6 | NetworkAddress |
| 7 | NetworkAddress |
| | NextNetworksArrayAddress |

| **Network** |
|---|
| NetworkIdentifier ("network id") |
| NetworkName |
| ChannelsListAddress |

| **ChannelsList** | |
|---|---|
| 0 | ChannelAddress |
| 1 | ChannelAddress |
| 2 | ChannelAddress |
| 3 | ChannelAddress |
| 4 | ChannelAddress |
| 5 | ChannelAddress |
| 6 | ChannelAddress |
| 7 | ChannelAddress |
| | NextChannelsArrayAddress |

| **Channel** |
|---|
| Channelidentifier ("TransportStream id") |
| OriginalNetworkIdentifier ("OriginalNetwork Id") |
| ServicesListAddress |

| **ServicesList** | |
|---|---|
| 0 | ServiceAddress |
| 1 | ServiceAddress |
| 2 | ServiceAddress |
| 3 | ServiceAddress |
| 4 | ServiceAddress |
| 5 | ServiceAddress |
| 6 | ServiceAddress |
| 7 | ServiceAddress |
| | NextServicesArrayAddress |

| **Service** |
|---|
| ServiceIdentifier ("service id") |
| ServiceName ("service name") |
| State ("running status") |
| CurrentNextEventAddress |

| **CurrentNextEvent** |
|---|
| CurrentEventIdentifier ("Event id") |
| CurrentEventStart ("start time") |
| CurrentEventDuration ("duration") |
| CurrentEventState ("running status") |
| CurrentEventTitleLength ("event name length") |
| CurrentEventTitle |
| CurrentEventDescriptionLength ("text length") |
| CurrentEventDescription |
| NextEventIdentifier ("Event id") |
| NextEventStart ("start_time") |
| NextEventDuration ("duration") |
| NextEventState ("running status") |
| NextEventTitleLength ("event name length") |
| NextEventTitle |
| NextEventDescriptionLength ("text length") |
| NextEventDescription |

The variables whose name contains the term "Address" are pointers to memory areas corresponding to the start of a data structure.

The other variables correspond to information extracted from the data stream. To aid understanding, these variables are followed in brackets and quotation marks by the name used in document (a).

It will be noted that the lists of networks, channels and services are each organized into arrays, each array being composed on the one hand of eight pointers to data structures of network, channel or service type, and on the other hand of a pointer to a possible array containing the remainder of the list. This last pointer is null when there is no other array, that is to say when an array contains the last elements of a list. This latter pointer is not indexed.

The arrays contain eight elements, this corresponding to a power of two. This makes it possible to determine the array which contains a desired pointer by masking, in this case, the last three bits of the channel index.

The database array contains a pointer to the array containing the first part of the list of networks.

The NetworksList array contains the pointers to the first eight networks. According to the present example embodiment, there are at most two NetworksList arrays containing the complete list of networks.

The Network array contains the information relating to a given network, as well as a pointer to a first array of the list of channels associated with this network.

The structure of the other arrays is similar to what has just been stated. Moreover, it is easy to extend it to the events and to other types of data.

According to a variant embodiment, the requests relating to the data concerning the structure of the network, of the channels and of the services are requests of permanent type, the aim of this being to keep the image of the array constantly up to date in the database.

In their exchanges with the management module, the applications use logic keys. These are translated by the module into a memory address corresponding to the location at which the item of information is stored. They form part of the parameters stored in the tables of requests.

Figure 5 is a diagram of the database of the management module in the case of the existence of a network, comprising two channels, each channel itself comprising two services.

The above mentioned table of application requests gives the list of requests being formulated by the applications. According to the present example, the only request in progress is a request of permanent type intended to retrieve the list of services present on a network.

In the present case, given that there are two channels in the network, two elementary requests are necessary to translate the application request: one elementary request per list of services or else per channel is written into the table of elementary requests.

In the figure, the filters corresponding to each elementary request are to be found on the left of the table of elementary requests.

It is assumed that at the instant illustrated by Figure 5, the service lists have been input a first time. Given the permanent nature of the application request, the corresponding filters, as well as the contents of the database relating to this request are maintained after the first occasion on which the expected data are obtained.

The digits identifying the branches joining a list and an element in this list correspond to the index (logic key) of this element in the list.

The application now seeks to obtain the list of events in progress in the network. There is one event in progress per service; this makes it necessary to filter the corresponding 'Current/Next EIT' table ("Event Information Table"). It will be assumed in the remainder of the account that such a table is indeed broadcast for each service, that is to say that the flags EIT_present_following_flag of the service description table have the value 1 for these services.

The request issued by the application comprises, for a given service, the following parameters:
- a request identifier,
- the type of the request,
- the logic key of the relevant service,
- a memory address of a buffer memory intended to receive demultiplexed data from the SI module.

It will be assumed firstly that the base contains no data item relating to the events in progress or the next events, that is to say that the table of elementary requests contains no elementary request relating to these data.

The programme guide application searches for example for the current and next events of the second service ("I") belonging to the first channel ("0") of the first network ("0"). This request follows a command by the user to display information about the programme in progress and the programme immediately after the programme in progress of a given service, for example Canal+ (French TV channel).

The logic key of the service concerned is then: 0000 00000 000001

A corresponding application request is transmitted to the SI module. This request will be of permanent type. Given that within the framework of this example, only the current and next events of a single service are asked for by the application, this request is elementary and ought not to be broken down further by the SI module. The elementary request is written into the corresponding table of requests.

Additionally, the SI module programs a filter of the demultiplexer so that the filtering of the EIT table relating to this request is carried out correctly. The value of the PID of the packets comprising the "Current/Next" EIT tables is 0x0012, according to document (a). The values of the service identifier ("service_id"), channel identifier ("transport_stream_id" and "original_network_id") which are necessary in order to determine which is the correct EIT table out of those broadcast are available in the database by virtue of the logic key. The state of the elementary request in the table of elementary requests is moreover set to the "Wait" state.

Once the correct EIT table has been detected, the SI module extracts from the packets the values of the data to be stored in its internal database. According to the present example embodiment, these data are those appearing in the "CurrentNextEvent" data structure described above. The SI module notifies the requesting application of the presence of the data and copies them into the buffer memory reserved beforehand by the application. In the database, the "CurrentNextEventAddress" address pointer of the Service data structure corresponding to the path indicated by the logic key is programmed with the memory address corresponding to the "CurrentNextEventAddress" structure. The state of the elementary request in the table of elementary requests switches from "Wait" to "Ready".

It should be noted that there is at most one current event and one next event per service. There is therefore no reason to index, in this particular case, the structure of the "CurrentNext Event" data structure since it is already fully identified by the logic key leading to the service on which it depends.

The case would be different if the contents of the EIT tables containing chronological series of events were loaded. In this case, indexation could prove to be necessary.

At one time or another, the application will cancel its request, for example following a command by the user to reclose the programme guide. Given that, in this case, there are no more application requests in progress which make reference to the elementary request relating to the current/next event, the SI module frees the filters of the demultiplexer and writes the present value of the system clock into the "Date" field of the table of primitive requests. The state of the request becomes "non-updated", assuming that data have actually been demultiplexed and stored in the base beforehand, which is the case here. In the contrary case, they would simply have been erased from the table.

According to a variant embodiment, the management module itself generates certain requests relating to the structure of the networks (especially the list of networks and the associated lists of channels) and maintains them permanently.

It should be noted that the invention is not limited solely to the transmission of data by satellite, radio relay or cable, but may be implemented in any system in which data or packets of data appear periodically in the data stream. This is the case in particular for recorded or prerecorded data streams.

Moreover, whereas the examples given relate more particularly to service data, it is clear that the invention is not limited to this type of data. So-called private data may, for example, be processed in an analogous manner.

## Claims

1. Process for managing service information in a digital television system, with regard to a receiver of the system, comprising the following step:
- programming of processing means (5) for the selective extraction of information from a digital data stream;
**characterized in that** it comprises the steps of :
- storage of at least some of the extracted information in a database by marking said stored information as being updated ;
- marking of a stored item of said stored information as not-to-be-updated in response to said processing means (5) relating to the extraction of this item of information being deprogrammed.

2. Process according to Claim 1, **characterized in that** following the formulating of a request of extraction of an item of information by an application, the programming and storage steps are carried out as follows:
- if the requested item of information is present in the database, transfer of the item of information to an application, programming of the means of selective extraction of the item of information from the data stream and updating of the item of information in the database, following the extraction of the item of information from the data stream;
- if the requested item of information is absent from the database, programming of the means of selective extraction and storage of the item of information in the database of the decoder following its extraction from the data stream.

3. Process according to one of Claims 1 or 2, **characterized in that** the means of selective extraction comprise a _ demultiplexer.

4. Process according to one of Claims 1 to 3, **characterized in that** the marking of a stored item of information as being updated is effective throughout the period following its extraction and during which the means of selective extraction are programmed to extract a new value therefrom.

5. Process according to one of Claims 1 to 4, **characterized in that** the marking of a stored item of information as being not-to-be-updated following its extraction from the stream is carried out in conjunction with a deprogramming of the means for searching for this item of information.

6. Process according to Claim 5, **characterized in that** the marking of an item of information as not-to-be-updated comprises the associating of this item of information with the date on which the means of selective extraction corresponding to the item of information were deprogrammed.

7. Process according to Claim 6, **characterized in that** if the database of the receiver becomes saturated, information marked as not-to-be-uptated is erased in order of seniority of date.

8. Process according to one of the preceding claims, **characterized in that** the marking of an item of information is communicated, with this item of information, to an application having requested the item of information.

9. Process according to one of the preceding claims, **characterized in that** an item of information marked as not-to-be-updated displayed on a screen by an application is identified visually as being non-updated.

10. Receiver in a digital television system in which service information, and especially programme guide information, is transmitted, the said receiver comprising:
a data stream demultiplexer (5), the said demultiplexer comprising programmable filters for selective extraction of information from the said stream, the said receiver being **characterized in that** it comprises:
- a memory (12) containing a database of the said receiver, the said database comprising information extracted previously;
- means (23) for marking the information of the database as updated or not-to-be-updated an item of the information being marked updated when it is stored at least the first time in the database and not-to-be-updated in response to said demultiplexer (5) relating to this item being deprogrammed.

11. Device according to Claim 10, **characterized in that** the marking as updated or as not-to-be-updated is performed as a function of the programming of the said demultiplexer (5).

12. Device according to one of Claims 10 or 11, **characterized in that** it furthermore comprises a clock used for marking not-to-be-updated information.

## Patentansprüche

1. Verfahren zur Verwaltung von Serviceinformationen in einem digitalen Fernsehsystem bezüglich eines Empfängers des Systems mit folgenden Schritten:
- Programmierung von Verarbeitungsmitteln (5) für die selektive Extrahierung von Informationen aus einem digitalen Datenstrom,
**dadurch gekennzeichnet dass,**
es die folgenden Schritte beinhaltet:
- Speicherung von wenigstens einigen der extrahierten Informationen in einer Datenbank durch Markierung der gespeicherten Informationen als aktualisiert,
- Markierung eines gespeicherten Anteils der gespeicherten Informationen als nicht zu aktualisieren, als Reaktion auf die Verarbeitungsmittel (5), bezogen auf die Extrahierung dieses Informationsanteils, der deprogrammiert wurde.

2. Verfahren nach Anspruch 1,
**dadurch gekennzeichnet, dass**
- nach der Formulierung einer Anforderung einer Extrahierung eines Informationsanteils durch eine Anwendung die Programmier- und Speicherschritte folgendermaßen durchgeführt werden:
- wenn der angeforderte Informationsanteil in der Datenbank anwesend ist, Übertragung dieses Informationsanteils zu einer Anwendung, Programmierung der Mittel zur selektiven Extrahierung dieses Informationsanteils aus dem Datenstrom und Aktuatisierung des Informationsanteils in der Datenbank, gefolgt von der Extrahierung dieses Informationsanteils aus dem Datenstrom,
- wenn der angeforderte Informationsanteil von der Datenbank abwesend ist, Programmierung der Mittel zur selektiven Extrahierung und Speicherung des Informationsanteils in der Datenbank des Dekoders, gefolgt von seiner Extrahierung aus dem Datenstrom.

3. Verfahren nach Anspruch 1 oder 2,
**dadurch gekennzeichnet, dass**
die Mittel zur selektiven Extrahierung einen Demultiplexer enthalten.

4. Verfahren nach einem der Ansprüche 1 bis 3,
**dadurch gekennzeichnet, dass**
die Markierung eines gespeicherten Informationsanteils als aktualisiert werdend über die Periode wirksam ist, die auf diese Extrahierung folgt und während der die Mittel der selektiven Extrahierung zum Extrahieren eines neuen Wertes daraus programmiert werden.

5. Verfahren nach einem der Ansprüche 1 bis 4,
**dadurch gekennzeichnet, dass**
die Markierung eines gespeicherten Informationsanteils als nicht zu aktualisieren nach ihrer Extrahierung aus dem Datenstrom in Verbindung mit einer Deprogrammierung der Mittel zum Suchen nach diesem Informationsanteil durchgeführt wird.

6. Verfahren nach Anspruch 5,
**dadurch gekennzeichnet, dass**
die Markierung eines Informationsanteils als "nicht zu aktualisieren", die Zuordnung dieses Informationsanteils zu den Daten enthält, auf die die Mittel zur selektiven Extrahierung entsprechend dem Informationsanteil deprogrammiert wurden.

7. Verfahren nach Anspruch 6,
**dadurch gekennzeichnet, dass**
dann, wenn die Datenbank des Empfängers gesättigt ist, als "nicht zu aktualisieren" markierte Informationen aus Altersgründen gelöscht werden.

8. Verfahren nach einem der vorangehenden Ansprüche,
**dadurch gekennzeichnet, dass,** die Markierung eines Informationsanteils mit diesem Informationsanteil zu einer Anwendung kommuniziert wird, die den Informationsanteil angefordert hat.

9. Verfahren nach einem der vorangehenden Ansprüche,
**dadurch gekennzeichnet, dass**
ein auf einem Schirm durch eine Anwendung angezeigter Informationsanteil, der als "nicht zu aktualisieren" markiert ist, als "nicht aktualisiert" optisch zu erkennen ist.

10. Empfänger in einem digitalen Femsehsystem, in dem Serviceinformationen und insbesondere Programmführer-Informationen mit folgenden Merkmalen übertragen werden, wobei der Empfänger beinhaltet:
einem Datenstrom-Demultiplexer (5), wobei der Demultiplexer programmierbare Fitter zur selektiven Extrahierung von Informationen aus dem Datenstrom enthält
und der Empfänger durch folgende Merkmale **gekennzeichnet** ist, wobei er beinhaltet:
- einen Speicher (12) mit einer Datenbank des Empfängers, wobei die Datenbank vorher extrahierte Informationen enthält,
- Mittel (23) zur Markierung der Informationen der Datenbank als "aktualisiert" oder "nicht zu aktualisieren", wobei ein Informationsanteil als aktualisiert markiert wird, wenn er wenigstens das erste Mal in der Datenbank gespeichert wird, und als "nicht zu aktualisieren" markiert wird, als Reaktion auf den Demultiplexer (5) bezüglich des Anteils der deprogrammiert wurde.

11. Gerät nach Anspruch 10,
**dadurch gekennzeichnet, dass**
die Markierung als aktualisiert, oder als nicht zu aktualisieren, in Abhängigkeit von der Programmierung des Demultiplexers (5) erfolgt.

12. Gerät nach einem der Ansprüche 10 oder 11,
**dadurch gekennzeichnet, dass**
es außerdem einen Taktgeber enthält, der für die Markierung der Informationen mit "nicht zu aktualisieren" benutzt wird.

## Revendications

1. Procédé de gestion d'informations de service dans un système de télévision numérique comportant au niveau d'un récepteur du système l'étape suivante :
- programmation de moyens de traitement (5) d'extraction sélective d'informations d'un flux de données numérique;
**caractérisé en ce qu'**il comporte les étapes de :
- mémorisation d'au moins une partie des informations extraites dans une base de données en marquant ladite information mémorisée comme étant mise à jour ;
- marquage d'une information mémorisée comme étant plus mise à jour lorsque lesdits moyens de traitement d'extraction (5) de l'information mémorisée sont déprogrammés.

2. Procédé selon la revendication 1, **caractérisé en ce que** suite à la formulation d'une requête d'information par une application, les étapes de programmation et de mémorisation sont réalisées de la façon suivante :
- en cas de présence de l'information dans la base de données, de transfert de l'information vers une application, de programmation des moyens d'extraction sélective de l'information du flux de données et de mise à jour de l'information dans la base de données, suite à l'extraction de l'information du flux de données ;
- en cas d'absence de l'information dans la base de données, de programmation des moyens d'extraction sélective et, le cas échéant, de stockage de l'information dans la base de données du décodeur suite à son extraction du flux de données.

3. Procédé selon l'une des revendications 1 ou 2, **caractérisé en ce que** les moyens d'extraction sélective comportent un démultiplexeur.

4. Procédé selon l'une des revendications 1 à 3, **caractérisé en ce que** le marquage d'une information mémorisée comme étant mise à jour est effectif pendant toute la période pendant laquelle les moyens de recherche sont programmés pour en extraire une nouvelle valeur.

5. Procédé selon l'une des revendications 1 à 4, **caractérisé en ce que** le marquage d'une information mémorisée comme étant plus mise à jour suite à son extraction du flux est réalisé en conjonction avec une déprogrammation des moyens de recherche de cette information.

6. Procédé selon la revendication 5, **caractérisé en ce que** le marquage d'une information mémorisée comme plus mise à jour comporte l'association de cette information avec la date à laquelle les moyens d'extraction sélective correspondant à l'information ont été déprogrammés.

7. Procédé selon la revendication 6, **caractérisé en ce qu'**en cas de saturation de la base de données du récepteur, des informations marquées comme plus mises à jour sont effacées par ordre d'ancienneté des dates.

8. Procédé selon l'une des revendications précédentes, **caractérisé en ce que** le marquage d'une information est communiqué, avec cette information, à une application ayant requis l'information.

9. Procédé selon l'une des revendications précédentes, **caractérisé en ce qu'**une information marquée comme plus mise à jour affichée sur un écran par une application est visuellement identifiée comme étant non-mise à jour.

10. Récepteur dans un système de télévision numérique dans lequel sont transmis des informations de service et notamment de guide de programmes, ledit récepteur comprenant :
un démultiplexeur (5) d'un flux de données, ledit démultiplexeur comportant des filtres programmables pour une extraction sélective d'informations dudit flux,
ledit récepteur étant **caractérisé en ce qu'**il comporte :
- une mémoire (12) contenant une base de données dudit récepteur, ladite base de données comprenant des informations extraites précédemment ;
- des moyens de marquage (23) des informations de la base de données comme mises à jour ou plus mises à jour, une information étant marquée comme mise à jour lorsque elle est mémorisée au moins la première fois dans la base de données et plus mises à jour lorsque le moyen d'extraction (5) de l'information est déprogrammé.

11. Dispositif selon la revendication 10, **caractérisé en ce que** le marquage comme mis à jour ou comme non-mis à jour est effectué en fonction de la programmation dudit démultiplexeur (5).

12. Dispositif selon l'une des revendications 10 ou 11, **caractérisé en ce qu'**il comporte en outre une horloge utilisée pour le marquage des informations plus mises à jour.
